# FASCICULE DE BREVET EUROPEEN

(11) **EP 3 490 099 B1**
(45) Date de publication et mention de la délivrance du brevet: **10.05.2023**
(21) Numéro de dépôt: 18208767.6
(22) Date de dépôt: 28.11.2018
(51) Int. Cl.: H02J 7/00, B60L 3/12, B60L 58/13, B60L 58/21, B60L 58/22, H01M 10/44, H01M 10/42

(54) **ARCHITECTURE DE MODULES BATTERIE CONNECTÉS EN PARALLÈLE**
ARCHITEKTUR VON PARALLEL GESCHALTETEN BATTERIEMODULEN
ARCHITECTURE OF PARALLEL CONNECTED BATTERY MODULES

(30) Priorité: 28.11.2017 FR 1761262
(43) Date de publication de la demande: 29.05.2019
(73) Titulaire: SAFT, 92300 Lavallois-Perret (FR)
(72) Inventeur: LAFLAQUIERE, Philippe, 33880 Saint Caprais de Bordeaux (FR); JAOUI, Younès, 33520 BRUGES (FR)
(74) Mandataire: Hirsch & Associés

(56) Documents cités:
- US-A1- 2005 156 566
- US-A1- 2010 033 135
- US-A1- 2012 262 121

## Description

### DOMAINE TECHNIQUE

Le domaine technique de la présente invention est celui des procédés de contrôle de modules batterie.

### ETAT DE LA TECHNIQUE

Un module batterie comprend typiquement une pluralité d'éléments électrochimiques, encore appelés générateurs électrochimiques ou accumulateurs, connectés électriquement, et réunis au sein d'un même conteneur formant l'enveloppe du module. Les éléments se déchargent et fournissent de l'énergie électrique à un consommateur électrique. Le module batterie peut être chargé par un chargeur afin d'augmenter la quantité d'énergie électrique stockée dans chaque élément du module.

Au cours du fonctionnement d'un module batterie, il est connu de mesurer périodiquement certains paramètres de son fonctionnement, tels que sa température, l'intensité du courant le traversant et la tension de chacun des éléments. A cet effet, on associe au module batterie un système électronique de gestion souvent désigné sous l'acronyme BMS pour « Battery Management System » en anglais. Si l'un des paramètres de fonctionnement du module ou de l'un des éléments du module sort d'une plage prédéterminée, le système électronique de gestion en informe l'utilisateur. Celui-ci intervient alors sur le module et effectue une opération dite d'entretien. Cette opération d'entretien peut par exemple consister en une mise au repos du module ou en un équilibrage des tensions des éléments du module. L'équilibrage des tensions consiste en une homogénéisation des tensions des différents éléments du module. Il permet, par une charge ou une décharge du ou des éléments dont la tension diffère sensiblement de celle des autres éléments du module, d'amener ce ou ces éléments à une tension voisine de celle des autres éléments du module.

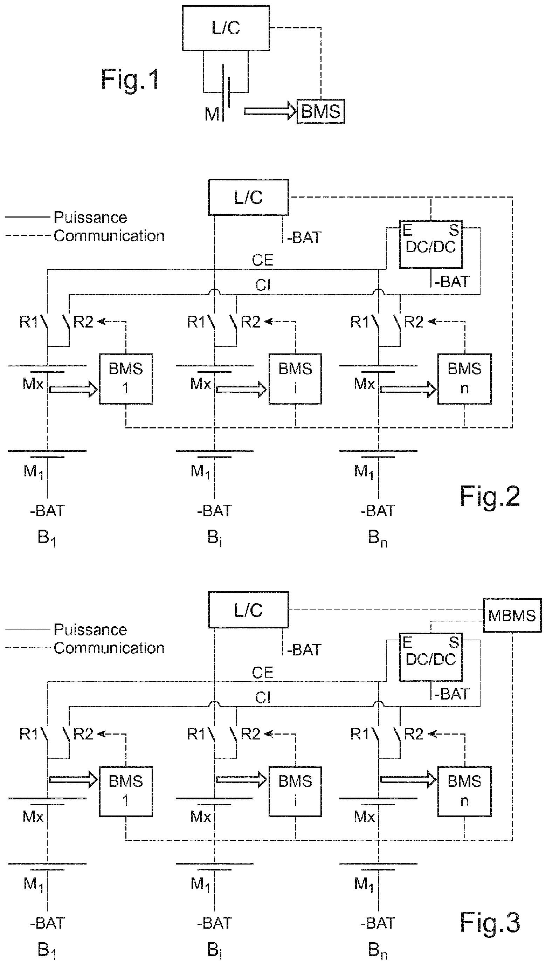

La figure 1 représente une architecture classique dans laquelle un module batterie (M) envoie à un BMS une information (COM) relative au fonctionnement du module. Le BMS peut, en fonction de cette information, agir sur le chargeur (C) ou sur le consommateur électrique (L), par exemple en stoppant la charge ou la décharge du module batterie, ou en effectuant une charge ou une décharge du module batterie, ou en réalisant une opération d'équilibrage des éléments du module ou en déterminant l'état de charge du module. L'utilisateur doit alors déconnecter le module du consommateur électrique ou du chargeur, et réaliser l'opération demandée.

Plusieurs modules batterie peuvent être connectés en série afin d'augmenter la tension requise par le consommateur électrique. De plus, plusieurs branches comprenant chacune un ou plusieurs modules batterie connectés en série peuvent être connectées en parallèle afin d'augmenter l'intensité du courant nécessaire au fonctionnement du consommateur électrique. Il est donc connu de fabriquer un système comprenant plusieurs branches en parallèle, chaque branche comprenant un ou plusieurs modules batterie connectés en série. Il s'agit d'un système en série-parallèle. Or, différents modules batterie, bien que fabriqués pour être identiques, peuvent présenter des caractéristiques légèrement différentes, par exemple une acceptance de charge ou une autodécharge différente, conduisant alors à des performances électriques différentes entre modules. Ainsi, lorsqu'on charge plusieurs modules batterie en série, ceux-ci peuvent ne pas tous se charger à la même vitesse. Les tensions aux bornes des différents modules peuvent varier d'un module à l'autre. Si la tension de l'un des modules en charge atteint plus rapidement sa tension d'arrêt, l'arrêt de la charge de ce module interviendra avant que les autres modules en série ne soient complètement chargés. Afin d'optimiser la charge et donc l'état de charge d'un module batterie au sein d'une branche, il est connu de réaliser un équilibrage du module.

En outre, au sein d'un même module batterie, un élément peut présenter des caractéristiques différentes de celles des autres éléments du module, conduisant ainsi à des performances électriques différentes. On réalise dans ce cas un équilibrage de cet élément vis-à-vis des autres éléments du module.

L'équilibrage d'un module batterie peut nécessiter d'isoler électriquement la branche dans laquelle se trouve ledit module, ou bien nécessiter une charge spécifique de la branche dans laquelle se trouve ledit module. Mais l'alimentation en courant du consommateur électrique est alors interrompue. L'équilibrage est donc source d'interruption de service pour l'utilisateur final. Il s'est donc posé le problème de pouvoir isoler l'une des branches en parallèle d'un système de modules batterie, sans perturber le fonctionnement des autres branches. Ces autres branches doivent pouvoir rester disponibles pour l'utilisateur, c'est-à-dire, continuer à fournir le courant requis par le fonctionnement du consommateur électrique.

Les documents CN 205248399, CN 102684273 et EP 2658070 décrivent des architectures comprenant plusieurs branches en parallèle, chaque branche comprenant au moins un module batterie. On peut noter que chaque branche comprend un convertisseur DC/DC bidirectionnel permettant la charge ou la décharge du module batterie. Ces architectures utilisent autant de convertisseurs DC/DC que de branches, ce qui les rendent complexes et coûteuses. On recherche donc un moyen de simplifier ces architectures.

Le document US 2012/0262121 décrit un circuit d'équilibrage de batterie pour équilibrer les tensions d'un appareil batterie amovible et d'un module batterie de référence, dans lequel l'appareil batterie amovible et le module batterie de référence sont connectés en parallèle, et l'appareil batterie amovible, qui peut être ajouté et détaché du circuit d'équilibrage de batterie de manière non destructive, est un appareil amovible incluant un module batterie ou un module batterie amovible, le circuit d'équilibrage de batterie comprenant :
- un canal d'une charge connectée au module batterie de référence et connectée à l'appareil batterie amovible par un premier interrupteur ;
- un canal de charge-décharge déconnecté du module batterie de référence mais connecté à l'appareil batterie amovible par un second interrupteur ;
- une unité de microcommande connectée au module batterie de référence et au module batterie amovible, pour accéder aux informations du module batterie de référence et de l'appareil batterie amovible et obtenir une valeur seuil en fonction de la tension du module batterie de référence ; et
- un circuit de commande de charge-décharge connecté au module batterie de référence par le canal de la charge, dans lequel, lorsque la tension de l'appareil batterie amovible est supérieure ou inférieure à la valeur de seuil, l'unité de microcommande commande les premier et second interrupteurs pour s'assurer que l'appareil batterie amovible est déconnecté du canal de la charge mais connecté au circuit de commande de charge-décharge par le canal de charge-décharge, et l'unité de microcommande fait en outre charger l'appareil batterie amovible par le module batterie de référence ou fait décharger la batterie amovible dans le module batterie de référence.

Il existe donc un besoin d'une architecture comprenant plusieurs branches en parallèle, chaque branche comprenant un ou plusieurs modules batterie connectés en série, cette architecture devant permettre un isolement de l'une des branches sans interruption de service, et devant être simple de conception et peu coûteuse.

### RESUME DE L'INVENTION

A cet effet, l'invention propose un procédé tel que défini dans le jeu de revendications annexé.

Le dispositif utilisé dans le procédé selon l'invention permet d'isoler électriquement une branche contenant un ou plusieurs module batterie, de la connecter au convertisseur DC/DC puis de réaliser l'opération d'entretien de cette branche, tout en utilisant la puissance disponible par les modules batterie des n-1 branches. La branche qui a été isolée est ensuite reconnectée aux autres branches en parallèle pour reconstituer le système initial.

L'invention permet d'effectuer des opérations telles qu'un équilibrage d'un ou plusieurs modules d'une branche, une détermination de l'état de charge (« State Of Charge » SOC) d'un ou de plusieurs modules d'une branche, une mesure de la capacité d'un ou plusieurs modules d'une branche, sans créer d'indisponibilité de service pour un utilisateur.

Une des caractéristiques du dispositif est qu'il utilise un unique convertisseur DC/DC abaisseur-élévateur de tension, bidirectionnel en courant, qui assure pour chaque branche individuellement, c'est-à-dire une branche après l'autre, l'opération d'entretien du ou des modules de ladite branche.

### BREVE DESCRIPTION DES FIGURES

La figure 1 représente une architecture classique comprenant un module batterie (M) et un dispositif (BMS) de surveillance du fonctionnement du module batterie.
La figure 2 représente une architecture dans laquelle chaque contrôleur de branche (BMSᵢ) commande la connexion de la branche (Bi) à laquelle il est associé au circuit interne (CI) ou au circuit externe (CE) et chaque contrôleur de branche commande la déconnexion de la branche (Bi) du circuit interne (CI) ou du circuit externe (CE). Il s'agit d'une architecture décentralisée.
La figure 3 représente une architecture dans laquelle un contrôleur principal (MBMS) commande à chaque contrôleur de branche (BMSᵢ) la connexion de la branche (Bi) à laquelle il est associé au circuit interne (CI) ou au circuit externe (CE) et commande la déconnexion de la branche (Bi) du circuit interne (CI) ou du circuit externe (CE). Il s'agit d'une architecture centralisée.

### DESCRIPTION DETAILLEE

Le terme « module batterie » ou « module » désigne dans ce qui suit un élément électrochimique ou plusieurs éléments électrochimiques connectés en série ou en parallèle ou en parallèle-série ou en série-parallèle, réunis au sein d'un même conteneur formant l'enveloppe du module, chaque élément étant équipé de dispositifs nécessaires à la connexion électrique avec les autres éléments du module, par exemple sous la forme de barrettes métalliques (busbar), de dispositifs de mesure des paramètres de fonctionnement de l'élément (température, tension, courant) et éventuellement de dispositifs de sécurité (soupape, opercule).

Le terme « branche batterie » ou « branche » désigne dans ce qui suit un module batterie ou plusieurs modules batterie connectés en série.

Le terme « entretien » désigne dans ce qui suit l'une des opérations suivantes :
- mise au repos d'un ou plusieurs modules batterie ;
- charge partielle ou complète d'un ou plusieurs modules batterie ; charge partielle ou complète d'un élément ou de plusieurs éléments d'un module batterie ;
- décharge partielle ou complète d'un ou plusieurs modules batterie ; décharge partielle ou complète d'un élément ou de plusieurs éléments d'un module batterie ;
- détermination de l'état de charge (SOC) d'un ou plusieurs modules batterie ; détermination de l'état de charge d'un ou plusieurs éléments d'un module batterie ;
- détermination de l'état de santé (SOH) d'un ou plusieurs modules batterie ; détermination de l'état de santé d'un ou plusieurs éléments d'un module batterie ;
- détermination de la capacité résiduelle d'un ou plusieurs modules batterie ; détermination de la capacité résiduelle d'un ou plusieurs éléments d'un module batterie ;
- équilibrage des tensions des modules batterie d'une même branche ; équilibrage des tensions des éléments d'un même module batterie.

Le dispositif utilisé dans le procédé selon l'invention va maintenant être décrit en relation avec la figure 2.

Le système comprend n branches batterie connectées en parallèle, n étant supérieur ou égal à 2. La figure 2 montre un cas particulier de trois branches B₁, Bᵢ et Bₙ connectées en parallèle.

Une branche comprend un ou plusieurs modules batterie (M₁, Mₓ) connectés en série.

L'ensemble formé par les différentes branches en parallèle est connecté aux bornes soit d'un chargeur (C), soit d'un consommateur électrique (L). Cet ensemble forme le circuit dit externe (CE). Celui-ci permet soit la charge des modules batterie par le chargeur, soit la décharge des modules batterie dans le consommateur électrique.

Chaque branche Bᵢ comprend un moyen de connexion ou de déconnexion de ladite branche au circuit externe. Ce moyen peut être un relais (R1). En dehors des opérations d'entretien, un courant passe dans toutes les branches du circuit externe, soit pour alimenter le consommateur électrique par le ou les modules de chaque branche, soit pour recharger le ou les modules des branches par le chargeur.

Le dispositif comprend un circuit interne (CI) à travers lequel un courant de charge ou de décharge peut circuler au cours des opérations d'entretien d'une branche donnée. Chaque branche comprend un moyen de connexion ou de déconnexion de ladite branche au circuit interne. Ce moyen peut être un relais (R2).

Le dispositif comprend un convertisseur DC/DC abaisseur-élévateur de tension (« step down-step up »), dont l'entrée (E) est connectée au circuit externe et dont la sortie (S) est connectée au circuit interne. Le convertisseur DC/DC est bidirectionnel en courant et permet la charge ou la décharge du ou des modules de la branche sur laquelle porte l'opération d'entretien. Dans un mode de réalisation préféré, le convertisseur est un convertisseur de type « Buck-Boost ».

Le convertisseur DC/DC abaisseur-élévateur de tension peut être lui-même constitué de deux convertisseurs DC/DC en série, l'un servant de convertisseur élévateur de tension, l'autre de convertisseur abaisseur de tension. Une capacité peut être intercalée entre ces deux convertisseurs en série permettant de faire varier la tension entre les deux convertisseurs.

Le convertisseur DC/DC abaisseur-élévateur de tension peut être lui-même constitué de deux convertisseurs DC/DC en parallèle, l'un servant pour élever la tension, l'autre pour abaisseur la tension.

Le convertisseur DC/DC peut être de type isolé ou non.

Chaque branche comprend un contrôleur de branche (BMS₁, BMSi, BMSₙ). Typiquement, un contrôleur de branche est un système électronique de surveillance des principaux paramètres de fonctionnement d'un module batterie (« Battery Management System »). Il mesure périodiquement ces paramètres et prévient l'utilisateur lorsqu'un des paramètres sort d'une plage de fonctionnement nominale. Chaque contrôleur de branche agit sur le moyen de connexion ou de déconnexion (R1) au circuit externe de la branche à laquelle il est associé. Chaque contrôleur de branche agit également sur le moyen de connexion ou de déconnexion (R2) au circuit interne de la branche à laquelle il est associé. Le fait d'avoir un contrôleur de branche par branche permet en cas de panne de l'un des contrôleurs de branche que les n-1 autres branches restent disponibles. Alors que dans le cas d'un contrôleur de branche central, si ce dernier tombe en panne, tout le dispositif tombe en panne. Le dispositif présente donc une meilleure tolérance à la panne.

Selon la figure 2, les contrôleurs de branches communiquent entre eux via un bus de communication. Chaque contrôleur de branche communique avec le convertisseur DC/DC et gère lui-même le déroulement de l'opération d'entretien de la branche à laquelle il est associé, en se basant sur les informations échangées avec les contrôleurs de branche des autres branches. Il s'agit d'une gestion décentralisée des opérations d'entretien.

La figure 3 illustre une variante dans laquelle les opérations d'entretien sont gérées de manière centralisée par un contrôleur principal (architecture centralisée). Les différents composants du système sont identifiés par les mêmes signes de référence que ceux utilisés sur la figure 2. La différence entre le système de la figure 3 et celui de la figure 2 réside dans le fait qu'à la figure 3, chaque contrôleur de branche communique avec un contrôleur principal (« Master Battery Management System » (MBMS)) via un bus de communication. Le contrôleur principal reçoit des informations de chaque contrôleur de branche et donne ordre à chaque contrôleur de branche de connecter ou déconnecter la branche à laquelle il est associé soit au circuit externe ou du circuit externe, soit au circuit interne ou du circuit interne. Le contrôleur principal joue le rôle de coordinateur entre les branches. Il pilote également le convertisseur DC/DC et donne des informations à l'utilisateur sur le fonctionnement du système.

Le fonctionnement du dispositif va maintenant être décrit en relation avec la figure 2.

### a) Fonctionnement en mode nominal :

En dehors des périodes d'entretien, toutes les branches B₁, Bᵢ et Bₙ sont connectées au circuit externe. Tous les relais R1 du circuit externe sont fermés et tous les relais R2 du circuit interne sont ouverts. Les modules sont soit chargés par le chargeur, soit se déchargent dans le consommateur électrique. Aucun courant ne circule dans le convertisseur DC/DC.

### b) Fonctionnement durant une opération d'entretien :

Soit Bi, la branche dans laquelle un module nécessite une opération d'entretien. Lorsque le contrôleur de branche BMSi de la branche Bi détecte qu'une opération d'entretien est nécessaire sur l'un des modules M₁, Mₓ de la branche Bᵢ, le contrôleur de branche BMSi ouvre le relais R1 du circuit externe de la branche Bi.

Selon l'opération d'entretien, soit le relais R1 reste ouvert, soit le contrôleur de la branche Bᵢ ferme le relais R2 pour connecter le ou les modules de la branche Bᵢ au circuit interne. Le relais R1 reste ouvert dans le cas où l'opération d'entretien consiste en une simple mise au repos du ou des modules de la branche Bᵢ. Le relais R2 se ferme si l'opération d'entretien consiste en une charge ou une décharge du ou des modules de la branche Bᵢ. Le contrôleur de branche commande le convertisseur DC/DC pour que celui-ci déclenche une charge ou une décharge du ou des modules de la branche Bᵢ.

Au cours de la charge du ou des modules de la branche Bᵢ par les modules des n-1 branches, les relais R1 des n-1 branches sont fermés. Les modules des n-1 branches continuent d'alimenter en courant le consommateur électrique par le circuit externe et en même temps alimentent en courant l'entrée du convertisseur DC/DC pour recharger le ou les modules de la branche Bi. La sortie du convertisseur DC/DC alimente uniquement le ou les modules de la branche Bi car le relais R2 de la branche Bi est fermé et les relais R2 des n-1 branches sont ouverts.

De préférence, la charge du ou des modules de la branche Bᵢ se fait par les modules des n-1 branches. On peut également envisager un mode de fonctionnement moins favorable dans lequel seule une partie des n-1 branches participe à la charge du ou des modules de la branche Bᵢ.

Si l'opération d'entretien consiste en une décharge du ou des modules de la branche Bi, cette décharge peut se produire soit dans les modules des n-1 branches, soit dans le consommateur électrique. Au cours de la décharge, le relais R2 de la branche Bi est fermé et les relais R1 des n-1 branches sont fermés. Le convertisseur DC/DC est bidirectionnel en courant et la connexion qui servait de sortie pour un entretien consistant en une charge fonctionne maintenant en entrée. Inversement, la connexion qui servait d'entrée en charge fonctionne maintenant en sortie. C'est par cette sortie que le courant provenant du ou des modules de la branche Bᵢ se décharge dans les modules des n-1 branches et/ou dans le consommateur électrique. Au cours de la décharge du ou des modules de la branche Bᵢ, les modules des n-1 branches continuent d'alimenter le consommateur électrique car les relais R1 des n-1 branches sont fermés.

De préférence, la décharge du ou des modules de la branche Bi se fait dans les modules des n-1 branches. On peut également envisager un mode de fonctionnement moins favorable dans lequel seule une partie des n-1 branches participe à la décharge du ou des modules de la branche Bᵢ.

Le dispositif ne permet de réaliser l'opération d'entretien que sur une seule branche à la fois. Si plusieurs branches nécessitent simultanément une opération d'entretien, le séquencement est fait de manière à qu'il y ait toujours, pour un dispositif comprenant n branches, au moins n-1 branches connectées au circuit externe. Un algorithme permet de gérer les priorités entre les différentes branches : synchronisation distribuée avec des horloges logiques, synchronisation distribuée utilisant un jeton.

Au cours de l'opération d'entretien, le contrôleur de branche BMSi effectue une mesure périodique des paramètres de fonctionnement du ou des modules de la branche et décide d'arrêter l'opération d'entretien lorsque les paramètres de fonctionnement se situent à l'intérieur d'une plage prédéterminée.

### c) Retour en fonctionnement nominal :

Avant de commander l'ouverture du relais R2, c'est-à-dire la déconnexion de la branche Bi du circuit interne et de commander la fermeture de R1, c'est-à-dire la connexion de la branche Bi au circuit externe, le contrôleur de branche BMSi de la branche Bi s'assure que la tension de la branche Bi est suffisamment proche de la tension des autres n-1 branches connectées en parallèle. Si ce n'est pas le cas, le contrôleur de branche BMSi donne ordre au convertisseur DC/DC de charger ou de décharger la branche Bᵢ. Une fois la tension recherchée atteinte, le contrôleur de branche BMSi ferme le relais R1 puis ouvre le relais R2. La branche Bi est ainsi reconnectée au circuit externe.

La tension de la branche Bi peut varier de manière significative de celle des n-1 autres branches, non pas suite à une opération d'entretien de la branche Bi qui entraine de facto un déséquilibre de cette branche par rapport aux autres branches mais suite par exemple à une phase prolongée de repos du système batterie. En effet, les taux d'autodécharge des modules pouvant différer, les tensions des modules pourront diverger à la fin de cette phase prolongée de repos. Dans ce cas, le contrôleur de branche BMSᵢ donnera ordre au convertisseur DC/DC de charger ou de décharger la branche Bi. Une fois la tension recherchée atteinte, le contrôleur de branche BMSᵢ fermera le relais R1 puis ouvrira le relais R2. La branche Bᵢ sera ainsi reconnectée au circuit externe.

Le fonctionnement du dispositif illustré à la figure 3 va maintenant être décrit. Dans ce mode de réalisation centralisé, le contrôleur principal MBMS commande à chaque contrôleur de branche BMSi de connecter ou de déconnecter la branche Bi à laquelle il est associé, soit au circuit interne, soit au circuit externe.

Lorsqu'une opération d'entretien est nécessaire sur la branche Bi :
1/ Le contrôleur de branche BMSi de la branche Bi en informe le contrôleur principal MBMS via un bus de communication ;
2/ Le contrôleur principal MBMS autorise le contrôleur de branche BMSi de la branche Bi à ouvrir le relais R1 de la branche Bᵢ ;
3/ Selon l'opération d'entretien souhaitée par le contrôleur de branche BMSi de la branche Bi, le contrôleur principal MBMS décide de laisser déconnectée la branche Bi en laissant ouvert le relais R1 ou de demander au contrôleur de branche de la branche Bᵢ de fermer R2 pour connexion au circuit interne. Selon l'opération souhaitée par le contrôleur de la branche Bi, le contrôleur principal pilote le convertisseur DC/DC pour effectuer des charges ou des décharges.

C'est le contrôleur de branche BMSi de la branche Bi qui identifie quand l'opération d'entretien est terminée, et qui en informe le contrôleur principal. De même que pour la commande décentralisée, avant de commander l'ouverture du relais R2, donc la déconnexion de la branche Bi du circuit interne, et la fermeture du relais R1, donc la connexion de la branche Bi au circuit externe, le contrôleur de branche BMSi de la branche Bi s'assure que la tension de la branche Bi est suffisamment proche de la tension des autres n-1 branches en parallèle. Si ce n'est pas le cas, le contrôleur de branche BMSᵢ de la branche Bᵢ donne ordre au convertisseur DC/DC de charger ou de décharger la branche Bi. Une fois la tension recherchée atteinte, le contrôleur de branche BMSᵢ de la branche Bᵢ ferme le relais R1 puis ouvre le relais R2.

Comme expliqué pour le mode de réalisation avec une commande décentralisée, le dispositif ne permet de réaliser l'opération d'entretien que sur une seule branche à la fois. Si plusieurs branches demandent une opération d'entretien en même temps, le contrôleur principal est chargé d'assuré le séquencement de manière à qu'il y ait toujours au moins n-1 branches connectées au circuit externe.

Comme la branche Bi n'est plus disponible pendant la durée de l'opération d'entretien, il est nécessaire que le service fourni par le dispositif puisse être assuré par les n-1 autres branches. Par conséquent, on choisit les modules batterie de sorte qu'ils puissent fournir un courant suffisamment élevé qui compense la chute de courant liée à la déconnexion de la branche Bi du circuit externe pendant l'opération d'entretien.

Des exemples d'opération d'entretien permettant d'optimiser les performances en puissance et/ou en énergie de modules batterie vont maintenant être détaillés.
- Il peut s'agir d'une mise au repos du ou des modules de la branche. On peut effectuer une mesure de leur tension à vide après que celle-ci se soit stabilisée et on peut reconnecter le ou les modules au circuit externe lorsque leur tension à vide se trouve à l'intérieur d'une plage de valeur prédéterminée.
- Il peut s'agir d'un équilibrage d'un ou plusieurs modules de la branche. Au cours de cet équilibrage, on fait subir au(x) module(s) de la branche présentant une tension significativement différente de celle des autres modules de cette branche soit une décharge partielle, soit une charge partielle de manière à homogénéiser les tensions des modules de la branche. L'équilibrage peut également être effectué pour homogénéiser les tensions des éléments électrochimiques au sein d'un même module. En effet, certaines technologies requièrent périodiquement une charge d'équilibrage afin d'homogénéiser les éléments électrochimiques et ainsi optimiser la capacité électrochimique du module.
- Il peut s'agir d'une décharge complète du ou des modules de la branche au cours de laquelle les modules sont déchargés jusqu'à attendre une tension d'arrêt prédéterminée. Cette opération permet par exemple de calibrer leur état de charge à 0%. On peut mesurer ainsi la capacité résiduelle du ou des modules.
- Il peut s'agir d'une charge complète du ou des modules de la branche au cours de laquelle les modules sont chargés jusqu'à attendre une tension d'arrêt prédéterminée. Cette opération permet par exemple de calibrer leur état de charge à 100%.

Ces opérations de charge ou de décharge permettent de déterminer avec précision l'état de charge des modules.
- Lorsque les modules batterie sont utilisés sur une longue période, par exemple dans des conditions de cyclage, les éléments électrochimiques perdent progressivement de leur capacité. Il est nécessaire pour l'utilisateur de connaître cette perte de capacité de manière à pouvoir remplacer par un module neuf un module présentant une perte de capacité trop importante. La perte de capacité ne peut être connue avec précision qu'en effectuant un cycle de charge/décharge du module.
- Un autre cas concerne la connexion d'une branche batterie en parallèle : pour éviter les appels de courant trop importants et dommageables pour les batteries du ou des modules de la branche à connecter en parallèle, il est nécessaire d'ajuster les tensions des batteries du ou des modules de ladite branche à une tension proche de celle(s) du ou des modules des autres branches avant de pouvoir la connecter.

En plus d'éviter l'interruption de service, le procédé selon l'invention permet de réaliser des opérations de maintenance soit de façon automatique, soit via un pilotage à distance. Il n'est plus nécessaire d'envoyer du personnel de maintenance, ce qui est actuellement le cas lorsque l'on veut par exemple réaliser un test de capacité ou bien pour reconnecter une branche batterie dans un système multi-branches.

De plus, dans le cas d'un remplacement de module batterie dans une branche, il est nécessaire que la tension du nouveau module batterie soit égale à celle des autres modules de la branche avant de l'installer. Actuellement, cela nécessite un outillage chargeur/déchargeur pour amener la tension du nouveau module à la valeur désirée. Le procédé selon l'invention permet de supprimer cet outillage car il permet à l'utilisateur d'amener la tension des modules de la branche à la même tension que celle du module à installer. Ainsi, le nouveau module peut être installé directement.

L'invention peut s'appliquer à toute technologie d'élément électrochimique. On peut citer, sans être limitatif, les éléments plomb-acide, les éléments à électrolyte alcalin, tels que le nickel-cadmium et le nickel-hydrure métallique, les éléments lithium-ion. Le dispositif est particulièrement adapté aux éléments électrochimiques dont le profil de charge comprend une zone dans laquelle la tension ne varie pas de manière continûment proportionnelle avec l'état de charge. Il s'agit d'éléments dont le profil de charge est « plat » dans une plage d'états de charge donnée, c'est-à-dire que la tension de l'élément augmente peu avec l'augmentation de l'état de charge dans cette plage d'états de charge donné. On peut citer les éléments électrochimiques dont la matière active cathodique comprend un phosphate lithié d'un métal de transition. Dans ce type d'élément, la variation de la tension à vide en fonction de l'état de charge présente une zone pour un état de charge compris entre 30 et 90% dans laquelle la tension à vide augmente au moins 10 fois moins rapidement en fonction de l'état de charge que pour un état de charge compris entre 90 et 100%. De tels éléments sont par exemples décrits dans le document EP-A-2 269 954.

Des méthodes de gestion de la charge spécifiquement adaptées à des éléments électrochimiques lithium-ion présentant un profil de charge plat dans une plage donnée d'états de charge sont par exemple décrits dans les documents EP-A-2 634 591 et EP-A-3 017 497.

Le dispositif trouve de nombreuses applications dans les domaines de l'aéronautique, de l'automobile, des télécommunications, de l'éclairage de secours, et le ferroviaire.

### EXEMPLES

Des exemples d'opérations d'entretien sont décrites ci-après.

### Exemple 1 : calibration de l'état de charge d'un module batterie disposé dans l'une des branches en parallèle d'un système, ledit module batterie comprenant des éléments électrochimiques lithium-ion dans lesquels la matière active cathodique est à base d'un oxyde lithié de métaux de transition, les métaux de transition étant le nickel, le cobalt et l'aluminium (matière active de type NCA), ou le nickel, le manganèse et le cobalt (matière active de type NMC)

L'état de charge d'un module batterie comprenant des éléments électrochimiques dont la matière active cathodique est à base de NCA ou de NMC est susceptible de dériver pour une longue durée de fonctionnement en cyclage charge/décharge. En effet, en fonctionnement, l'état de charge d'un module est calculé en se basant sur le bilan des ampères heures chargés et déchargés et l'état de charge réel du module peut différer notablement de l'état de charge calculé par cette méthode basée sur la coulométrie. Afin de connaitre l'état de charge réel du module, il est nécessaire soit de mettre le module au repos et d'attendre que la tension en circuit ouvert se stabilise, soit d'imposer un faible courant de décharge pendant une durée pouvant aller jusqu'à plusieurs minutes. De telles conditions peuvent parfois ne pas être rencontrées, en particulier lorsque le système batterie est utilisé 24 heures par jour.

Le dispositif permet de remédier à ce problème, en permettant que le contrôleur principal ou le contrôleur de branche - selon qu'il s'agit d'une architecture centralisée ou décentralisée - déconnecte la branche contenant le module dont on veut déterminer l'état de charge réel. La mesure de la tension à vide permet par exemple de déterminer l'état de charge réel du module. Une fois cette détermination effectuée, le contrôleur principal ou le contrôleur de branche commande la charge ou la décharge de la branche pour que la tension du module atteigne une valeur proche de celle des modules des autres branches.

Lorsque l'équilibre entre les tensions est atteint, la branche contenant le module est reconnectée au circuit externe. L'opération est ensuite répétée sur les autres branches.

### Exemple 2 : test de capacité

Dans un cas typique d'utilisation, un module batterie n'est jamais déchargé jusqu'à 0% de son état de charge, ceci dans le but d'éviter les effets négatifs des états de charge extrêmes sur le vieillissement du module. Il n'est donc pas facile d'avoir une estimation précise de la capacité réelle d'un module, sauf en effectuant un test de capacité. Ce test de capacité nécessite de charger le module jusqu'à sa tension d'arrêt pour fixer l'état de charge à 100%, puis de décharger le module jusqu'à sa tension d'arrêt et de mesurer la capacité déchargée. Ce test ne peut pas être effectué lorsque le système batterie est utilisé 24 heures par jour

Le dispositif permet de remédier à ce problème, en permettant que le contrôleur de branche ou le contrôleur principal déconnecte la branche du circuit externe, la connecte au circuit interne et effectue le cycle de charge/décharge tel que décrit tandis que les autres branches restent connectées au circuit externe pour assurer le service à l'utilisateur. Une fois le test de capacité effectué, le contrôleur de branche ou le contrôleur principal charge la branche pour la mettre au même niveau de tension que les autres branches, de manière à pouvoir la reconnecter au circuit externe.

La procédure peut être répétée sur les autres branches jusqu'à ce que le système complet ait effectué son contrôle de capacité.

### Exemple 3 : calibration de l'état de charge et équilibrage sur module batterie comprenant des éléments électrochimiques présentant un profil de charge « plat » sur une plage donnée d'états de charge

Certaines applications telles que les véhicules hybrides imposent d'effectuer des charges/décharges dans une fenêtre donnée d'états de charge, par exemple allant de 30% à 70%, pour des raisons de performance et de préservation de la durée de vie de la batterie. L'état de charge d'un module batterie comprenant des éléments électrochimiques dont la matière active cathodique présente un profil de charge « plat » dérive après plusieurs cycles par rapport à l'état de charge estimé par coulométrie. De plus, les éléments électrochimiques sont déséquilibrés après une certaine période en raison de leurs différents courants d'autodécharge. Une détermination des états de charge des éléments électrochimiques et une comparaison entre les différentes valeurs obtenues permet de détecter si certains éléments doivent subir un équilibrage. Or, la détermination de l'état de charge de ce type d'éléments à profil de charge « plat » ne peut se faire qu'en amenant la tension de ces éléments hors de la zone plate du profil de charge, par exemple en les chargeant au-dessus de 90% d'état de charge. Cela signifie que l'utilisateur doit effectuer une charge quasi complète du module batterie, ce qui peut poser problème. En effet, l'utilisateur doit avoir recours à un chargeur externe pour atteindre au moins 90% d'état de charge. De plus, il doit arrêter temporairement le fonctionnement du système.

Le dispositif permet de remédier à ce problème, en permettant que le contrôleur de branche ou le contrôleur principal isole une branche sur circuit interne de manière à la charger au-dessus de 90% d'état de charge, tandis que l'état de charge moyen des autres branches qui restent connectées au circuit externe est maintenu entre 30% et 70% pour continuer à assurer l'alimentation du moteur du véhicule hybride.

Une fois l'équilibrage effectué, le contrôleur de branche ou le contrôleur principal commande la décharge de la branche pour la mettre à niveau des autres branches de manière à pouvoir la reconnecter au circuit externe. L'opération est ensuite répétée sur les autres branches.

## Revendications

1. Procédé de contrôle de modules batterie, ledit procédé mettant en oeuvre un dispositif de contrôle de modules batterie, ledit dispositif comprenant au moins deux branches (B₁, Bᵢ, Bₙ) connectées en parallèle, chaque branche comprenant plusieurs modules batterie (M₁, Mₓ) connectés en série, chaque branche pouvant être connectée à un circuit interne (CI) ou à un circuit externe (CE),
ledit circuit externe étant apte à :
- la charge des modules batterie desdites au moins deux branches par un chargeur (C),
- la décharge des modules batterie desdites au moins deux branches dans un consommateur électrique (L) ;
ledit circuit interne étant apte à :
- la charge des modules batterie de l'une des branches par les modules batterie d'une ou plusieurs autres branches et à
- la décharge des modules batterie de l'une des branches dans les modules batterie d'une ou plusieurs autres branches ;
ledit dispositif comprenant en outre :
- un contrôleur de branche (BMS₁, BMSi, BMSₙ) par branche, apte à commander :
- la connexion au circuit externe et la déconnexion au circuit externe de la branche à laquelle le contrôleur de branche est associé, et
- la connexion au circuit interne et la déconnexion au circuit interne de la branche à laquelle le contrôleur est associé, et
- un unique convertisseur DC/DC abaisseur-élévateur de tension, bidirectionnel en courant, dont l'entrée est connectée au circuit externe et la sortie est connectée au circuit interne, apte à assurer dans chaque branche individuellement la charge et la décharge des modules de ladite branche, ledit procédé comprenant les étapes de :
a) connexion de toutes les branches (B₁, Bᵢ, Bₙ) du dispositif au circuit externe, les modules de chaque branche étant soit chargés par le chargeur, soit déchargés dans le consommateur électrique ;
b) déconnexion du circuit externe (CE) de l'une des branches Bi du dispositif ou connexion au circuit interne (CI) de l'une des branches Bi du dispositif ;
c) réalisation d'une opération d'entretien des modules batterie (M₁, Mₓ) de ladite branche Bi ; l'opération d'entretien étant choisie parmi :
- un équilibrage entre les tensions des modules batterie de ladite branche Bi,
- une détermination de l'état de charge des modules batterie de ladite branche Bi,
- une détermination de la capacité des modules batterie de ladite branche Bi,
- une détermination de l'état de santé des modules batterie de ladite branche Bᵢ,
les modules batterie ne subissant pas l'opération d'entretien étant connectés au circuit externe pendant l'opération d'entretien et continuant à alimenter le consommateur électrique pendant l'opération d'entretien ;
d) déconnexion du circuit interne de ladite branche Bi lorsque, à l'étape b), ladite branche a été connectée au circuit interne ;
e) reconnexion de ladite branche Bᵢ au circuit externe.

2. Procédé selon la revendication 1, dans lequel l'opération d'entretien de l'étape c) comprend une phase de mise au repos des modules batterie de ladite branche.

3. Procédé selon la revendication 1, dans lequel l'opération d'entretien de l'étape c) consiste en une charge partielle ou complète des modules batteries de ladite branche Bi par les modules batterie d'une autre branche ou des autres branches.

4. Procédé selon la revendication 3, dans lequel le convertisseur DC/DC convertit la tension des modules batteries de l'autre branche ou des autres branches en une tension de charge des modules de ladite branche Bᵢ.

5. Procédé selon la revendication 1, dans lequel l'opération d'entretien de l'étape c) consiste en une décharge partielle ou complète des modules batteries de ladite branche Bi dans les modules batterie d'une autre branche ou des autres branches.

6. Procédé selon la revendication 5, dans lequel le convertisseur DC/DC convertit la tension des modules batteries de ladite branche Bᵢ en une tension de charge des modules d'une autre branche ou des autres branches.

7. Procédé selon l'une des revendications 1 à 6, dans lequel :
- l'étape b) est initiée lorsqu'un contrôleur de branche (BMSᵢ) détecte qu'un paramètre de fonctionnement d'un des modules batterie de ladite branche Bi sort d'une plage de valeurs prédéterminée ;
- les étapes d) et e) sont initiées lorsqu'un contrôleur de branche détecte qu'un paramètre de fonctionnement d'un des modules batterie de ladite branche entre dans une plage de valeurs prédéterminée.

## Patentansprüche

1. Verfahren zum Steuern von Batteriemodulen, wobei das Verfahren eine Vorrichtung implementiert zur Steuerung von Batteriemodulen, wobei die Vorrichtung mindestens zwei parallel geschaltete Zweige (B₁, Bᵢ, Bₙ) umfasst, wobei jeder Zweig mehrere in Reihe geschaltete Batteriemodule (M₁, Mₓ) umfasst, wobei jeder Zweig mit einem internen Stromkreis (CI) oder an einen externen Stromkreis (CE), angeschaltet werden kann,
wobei der externe Stromkreis in der Lage ist
- Laden der Batteriemodule der mindestens zwei Zweige durch ein Ladegerät (C),
- Entladen der Batteriemodule der mindestens zwei Zweige in einen elektrischen Verbraucher (L), wobei der interne Stromkreis dazu in der Lage ist
- Laden der Batteriemodule eines der Zweige durch die Batteriemodule eines oder mehrere andere Zweige und
- Entladen der Batteriemodule eines der Zweige in die Batteriemodule eines oder mehrerer anderer Zweige, wobei die Vorrichtung ferner umfasst
- eine Zweigsteuerung (BMS₁, BMSᵢ, BMSₙ) pro Zweig, die steuern kann
- Anschluss an den externen Stromkreis und Trennung vom externen Stromkreis des Zweigs, der die Zweigsteuerung zugeordnet ist, und
- die Verbindung zum internen Stromkreis und die Trennung zum internen Stromkreis des Zweigs, der die Steuerung zugeordnet ist, und
- ein einzelner bidirektional Buck-Boost DC-DC Spannungswandler, dessen Eingang mit der externen Stromkreis verbunden ist und dessen Ausgang mit der internen Stromkreis verbunden ist, die in der Lage ist, in jedem Zweig individuell das Laden und Entladen der Module des besagten Zweigs sicherzustellen, wobei das besagte Verfahren die folgenden Schritte umfasst
a) Anschluss aller Zweige (B₁, Bᵢ, Bₙ) des Gerätes an den externen Stromkreis, wobei die Module jedes Zweiges entweder durch das Ladegerät geladen oder im elektrischem Verbraucher entladen werden
b) Trennung des externen Stromkreises (CE) eines der Zweige Bi des Geräts oder Verbindung mit dem internen Stromkreis (CI) eines der Zweige Bi des Geräts,
c) Durchführen eines Wartungsvorgangs an den Batteriemodulen (M₁, Mₓ) des Zweigs Bi, wobei der Wartungsvorgang ausgewählt wird
- einen Ausgleich zwischen den Spannungen der Batteriemodule des Zweigs Bi,
- eine Bestimmung des Ladezustands der Batteriemodule des Zweigs Bi,
- eine Bestimmung der Kapazität der Batteriemodule des Zweigs Bi,
- eine Bestimmung des Gesundheitszustands der Batteriemodule des Zweigs Bi,
wobei die nicht dem Wartungsbetrieb unterzogenen Batteriemodule während des Wartungsbetriebs an den externen Stromkreis angeschlossen sind und den elektrischen Verbraucher während des Wartungsbetriebs weiter versorgen,
d) Trennen des internen Schaltkreises von dem Zweig Bi, wenn in Schritt b) der Zweig mit dem internen Schaltkreis verbunden wurde
e) Wiederverbindung des Zweigs Bi mit dem externen Stromkreis.

2. Verfahren nach Anspruch 1, bei dem der Wartungsvorgang von Schritt c) eine Ruhephase der Batteriemodule des Zweigs umfasst.

3. Verfahren nach Anspruch 1, bei dem der Wartungsvorgang von Schritt c) aus einem teilweisen oder vollständigen Laden der Batteriemodule des Zweigs Bi durch die Batteriemodule eines anderen Zweigs oder anderer Zweige besteht.

4. Verfahren nach Anspruch 3, bei dem der DC/DC-Wandler die Spannung der Batteriemodule des anderen Zweigs oder der anderen Zweige in eine Ladespannung der Module des besagten Zweigs Bi umwandelt.

5. Verfahren nach Anspruch 1, bei dem der Wartungsvorgang von Schritt c) aus einer teilweisen oder vollständigen Entladung der Batteriemodule des Zweigs Bi in die Batteriemodule eines anderen Zweigs oder anderer Zweige besteht.

6. Verfahren nach Anspruch 5, bei dem der DC/DC-Wandler die Spannung der Batteriemodule des Zweigs Bi in eine Ladespannung der Module eines anderen Zweigs oder anderer Zweige umwandelt.

7. Verfahren nach einem der Ansprüche 1 bis 6, bei dem
- Schritt b) eingeleitet wird, wenn eine Zweigsteuerung (BMS) erkennt, dass ein Betriebsparameter eines der Batteriemodule des Zweigs Bi außerhalb eines Bereichs von vorbestimmten Werten liegt,
- die Schritte d) und e) werden eingeleitet, wenn eine Zweigsteuerung erfasst, dass ein Betriebsparameter eines der Batteriemodule des Zweigs in einen Bereich von vorbestimmten Werten fällt.

## Claims

1. Method for controlling battery modules, said method implementing a device for controlling battery modules, said device comprising at least two branches (B₁, Bᵢ, Bₙ) connected in parallel, each branch comprising several battery modules (M₁, Mₓ) connected in series, each branch being able to be connected to an internal circuit (CI ) or to an external circuit (CE), said external circuit being able to
- charge the battery modules of said at least two branches by a charger (C),
discharge the battery modules of said at least two branches into an electrical consumer (L),
said internal circuit being able to
- charge the battery modules of one of the branches by the battery modules of one or several other branches and
- discharge the battery modules of one of the branches into the battery modules of one or more other branches ;
said device further comprising:
- a branch controller (BMS₁, BMSᵢ, BMSₙ) per branch, able to control:
- connection to the external circuit and disconnection from the external circuit of the branch to which the branch controller is associated, and
- connection to the internal circuit and the disconnection to the internal circuit of the branch to which the controller is associated, and
- a single buck-boost DC/DC converter, bidirectional with respect to current, the input of which is connected to the external circuit and the output of which is connected to the internal circuit, able to provide, in each branch individually, charging and discharging of the module or modules of said branch, the said method comprising the steps of
a) connection of all the branches (B₁, Bᵢ, Bₙ) of the device to the external circuit, the modules of each branch being either charged by the charger or discharged into the electrical consumer
b) disconnection of the external circuit (CE) of one of the branches Bi of the device or connection to the internal circuit (CI) of one of the branches Bi of the device,
c) performing a maintenance operation on the battery modules (M₁, Mₓ) of said branch Bi; the maintenance operation being chosen from among:
- a balancing between the voltages of the battery modules of said branch Bi,
- a determination of the state of charge of the battery modules of said branch Bi,
- a determination of the capacity of the battery modules of said branch Bi,
- a determination of the state of health of the battery modules of said branch Bi, the battery modules not undergoing the maintenance operation being connected to the external circuit during the maintenance operation and continuing to supply the electrical consumer during the maintenance operation,
d) disconnection of the internal circuit from said branch Bi when, in step b), said branch has been connected to the internal circuit
e) reconnection of said branch Bi to the external circuit.

2. Method according to claim 1, in which the maintenance operation of step c) comprises a phase of putting the battery modules of said branch to rest.

3. Method according to claim 1, in which the maintenance operation of step c) consists of a partial or complete charging of the battery modules of said branch Bi by the battery modules of another branch or other branches.

4. Method according to claim 3, in which the DC/DC converter converts the voltage of the battery modules of the other branch or of the other branches into a charging voltage of the modules of the said branch Bi.

5. Method according to claim 1, in which the maintenance operation of step c) consists of a partial or complete discharge of the battery modules of said branch Bi in the battery modules of another branch or other branches.

6. Method according to claim 5, in which the DC/DC converter converts the voltage of the battery modules of said branch Bi into a charging voltage of the modules of another branch or other branches.

7. Method according to one of claims 1 to 6, in which
step b) is initiated when a branch controller (BMS) detects that an operating parameter of one of the battery modules of said branch Bi goes out of a range of predetermined values,
- steps d) and e) are initiated when a branch controller detects that an operating parameter of one of the battery modules of said branch falls within a range of predetermined values.
